# EUROPEAN PATENT SPECIFICATION

(11) **EP 2 241 690 B1**
(45) Date of publication and mention of the grant of the patent: **31.12.2014**
(21) Application number: 10388004.3
(22) Date of filing: 22.02.2010
(51) Int. Cl.: E04B 1/00, E04B 1/16, E02D 27/02, E04B 1/76, E04B 5/32

(54) **Insulated foundation element for mounting on precast base foundation**
Isoliertes Fundamentelement zum montieren auf ein Fertigteilfundament
Elément de fondation isolé pour monter sur une fondation de base prefabriquée

(30) Priority: 25.02.2009 DK 200900259; 19.05.2009 DK 200900633
(43) Date of publication of application: 20.10.2010
(73) Proprietor: Klaus Nielsen Rådgivende Ingeniørfirma F.R.I. A/S, 2990 Nivå (DK)
(72) Inventor: Nielsen, Klaus, 2990 Nivå (DK)
(74) Representative: Nielsen, Leif

(56) References cited:
- WO-A1-91/09180
- WO-A2-2007/046718
- DE-U1-202004 005 226
- GB-A- 2 425 318
- US-A- 5 596 855
- US-A- 5 803 669

## Description

The present invention relates to a foundation element for mounting on a precast base foundation.

The present invention also relates to a method of mounting as well as use of the foundation element.

### The prior art

It is generally known to cast a foundation at the site where it is to be used, usually by casting it in a shuttering or in foundation blocks with an applied external and/or internal insulation covered by earth.

One of the drawbacks of this is the line loss (thermal loss in the edge zones). Where for instance wall elements and masonry stand on top of a cast uninsulated foundation edge, thermal bridges will occur, and thereby an undesirable thermal loss at the level of ground deck/floor. An example of such a structure can be seen in WO 98/39530 A1. Here, the column between the wall elements likewise constitutes a thermal bridge, and, thus, the structure is not useful for the building of constructions which satisfy national and international insulation requirements.

A similar structure of a wall/floor/ceiling panel is described in US 4942707 A, where vertical and horizontal reinforced ribs reinforce the concrete panel, and where recesses in the insulation element constitute a form for the casting of the reinforced horizontal and vertical ribs. The insulation layer behind these ribs is not sufficient to avoid thermal bridges, just as the element does not have the right structure or strength to be used as a foundation for one storey or multi-storey houses. A similar construction is disclosed in US 5596855 A in which the wall element is cast in concrete between two insulation layers acting as moulds for the wall.

WO 91/09180 A1 also discloses a similar element which can be used as an edge element, such as a foundation wall, base or house wall. The element comprises an inner and an outer plate of insulation material with spacers there between and between which the wall element is cast. Reinforcement rods are mounted horizontically near the upper and the lower edge of the element.

WO 2007/046718 A1 discloses a concrete floor system in which the floor slab is cast together with the load bearing reinforced footing at the edges of the floor slab. The load bearing beam is cast in a U-shaped mould of polystyrene in which reinforcement is placed at the construction site. The floor slab is cast and the load bearing edge beam are then cast simultaneously.

DE 202004005226 U discloses a foundation system in which the floor slab is cast together with the load bearing footing at the edges of the floor slab. The load bearing beam is cast in ready made insulation blocks of polystyrene having cylindrical passages for casting columns of the footing. The columns are cast together with the floor slab in a wet in wet casting process. Similar footings for buildings are disclosed in US 5803669 A and GB 2425318 A, in which the footings are cast as solid beams between two insulation layers instead of columns cast in cylindrical passages of the insulation element.

In order to avoid thermal losses at foundations, inter alia insulation materials are used, for instance incorporated between two layers of Leca stones.

The load-bearing capacity of such foundations, however, limits the building construction to a height of one to two storeys.

### The object of the invention

It is the object of the invention to provide a foundation element of the type mentioned in the opening paragraph, which both insulates, supports and minimizes the line loss in the foundation structure, thereby avoiding thermal bridges in the foundation itself and at the area at the connection between walls, foundation and ground deck.

It is a further object of the invention to minimize the consumption of concrete significantly relative to the normal consumption of corresponding foundations.

Finally, it is an object of the invention to minimize the amount of time spent on this normally time-consuming work by supplying finished elements with insulation and reinforcement, which are mounted on a base foundation cast in advance.

### Summary of the invention

The object stated above is achieved by a foundation element as described in the introductory portion of claim 1, wherein the foundation element comprises a front plate, an insulation element as well as a plurality of load-bearing columns and beams . The foundation element is characterized in that said insulation element comprises vertical recesses on the side of the insulation elementshich faces away from the front plate and in which reinforcement is mounted, and in which a plurality of load-bearing concrete columns may be cast, as well as one or more horizontal recesses wherein one of the horizontal recesses is placed along the upper edge of the insulation element on the side facing away from the front plate, and in which reinforcement is likewise mounted, and in which one or more load-bearing concrete beams may be cast. This structure makes it possible to insulate, support and minimize line losses and thereby thermal bridges in the foundation structure.

Optionally, recesses are also provided on the side of the insulation element which faces inwardly toward the front plate, as stated in claim 2, which makes it possible to position the column and beam reinforcement as desired and needed.

It appears from claim 3 that the front plate has dowels which extend through the insulating element to recesses, wherein the dowels secure the front plate to the insulation element with lock washers, which makes it possible to secure the position of the front plate relative to the insulation element, and that the free edge of the dowels may be embedded in columns and/or beams, whereby the front plate is fixed in the element.

As appears from claim 4, in a preferred embodiment, the front plate is of soft-cast fibre concrete or fibre-reinforced plaster.

Another object is achieved by a method according to the invention for the mounting of a foundation element, as described in claim 5, wherein the foundation element is mounted on a precast base foundation, wherein dowels in the base foundation are disposed corresponding to columns of the foundation element, wherein load-bearing columns are cast of concrete around reinforcement in vertical recesses on the side of the insulation element, which faces away from the front plate of the foundation element, and wherein at least one load-bearing beam is cast of concrete around at least one reinforcement in at least one horizontal recess along the upper edge of the insulation element, which faces away from the front plate of the foundation element, said foundation element being connected with the base foundation by embedding the dowels in the reinforced load-bearing columns of the foundation element. The supply of finished elements with insulation and reinforcement minimizes the amount of time spent on this normally time-consuming work.

As stated in claim 6, the columns of the foundation element may advantageously be cast in a first step and then harden completely or partly, and then at least one beam is cast together with a ground deck in one and the same operation.

As stated in claim 7, the columns and beams of the element may also be cast in one and the same operation together with a ground deck.

Finally, claim 8 discloses use of the foundation element according to the invention, said element being used for structures where both a front wall and a rear wall may be supported, which makes the use of the element very flexible.

### The drawing

The invention will be explained more fully below with reference to the drawing, in which:
- fig. 1: shows an isometric view of the foundation element,
- fig. 2: shows a foundation element seen in a horizontal section at column level,
- fig. 3: shows a foundation element in cross-section, incorporated in a building structure,
- fig. 4: shows a foundation element for a load-bearing rear wall and a front wall with a load, where the load-bearing beams have their upper sides at the same level,
- fig. 5: shows a foundation element for a load-bearing rear wall and a front wall with a load, where the load-bearing beams have their upper sides at different levels,
- fig. 6: shows an alternative embodiment of the foundation element, which is dimensioned for mounting on a point foundation.

### Detailed description of the invention

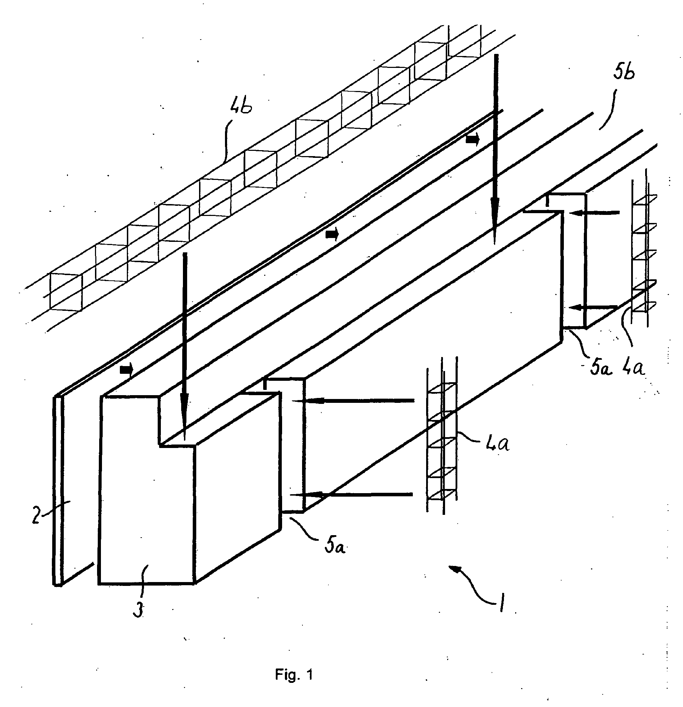

A foundation element according to the invention is shown in figures 1 - 6.

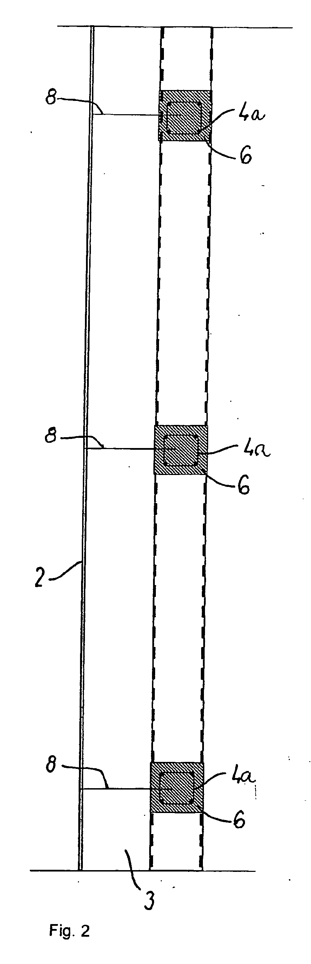

Figure 1 shows an isometric drawing of the various construction parts which are included in an embodiment of a foundation element 1 according to the invention, in which a front plate 2, an insulation element 3 and a reinforcement 4a, 4b are shown separately. The insulation element 3 is made e.g. of polystyrene. It is indicated by arrows how the parts are to be mounted and thereby cooperate in a finished foundation element 1. The front plate 2 may be of soft-cast fibre concrete, fibre-reinforced plaster or another suitable plate material which is provided with dowels 8 (figure 2). When the insulation element 3 is mounted subsequently on the front plate 2, this takes place in that the dowels 8 pass through the insulation element 3 to the recesses 5a, 5b in which the reinforcement 4a for columns 6 and the reinforcement 4b for beams 7 are to be mounted, and the dowels 8 are then secured in these recesses 5a, 5b by means of lock washers (not shown) against the insulation element 3 both during transport and during the further mounting at the construction site. The column reinforcement 4a extends right into the recess 5b of the insulation element 3 to the beam 7 and is connected with the reinforcement 4b for the beam 7, so that columns 6 and beams 7 are statically connected in the cast foundation element 1. The reinforcement 4a, 4b for columns 6 and beams 7 are secured against the insulation element 3, so that the foundation element 1 may be transported as a whole to the construction site and be positioned on the base foundation 10 directly from the truck.

A cast foundation element 1 with a horizontal section below the lower side of the beam through the columns 6 is shown in figure 2, from which it appears clearly that the dowels 8 of the front plate 2 extend through the insulation element 3 and out into the recesses 5 to the column reinforcement 4a, where the ends of the dowels 8 are embedded in the columns 6 and/or the beam 7 in connection with the subsequent mounting and casting.

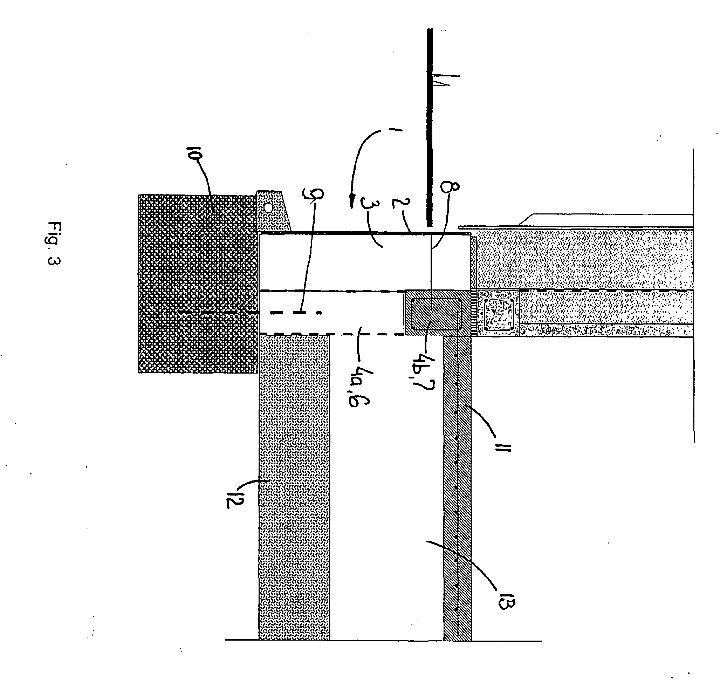

The assembled reinforced foundation element is thus intended to be mounted at the site of its use on top of the precast base foundation 10, in which dowels 9 are secured corresponding to columns 6. The dowels 9 are connected /cast firmly to the columns 6 of the foundation element 1, which is indicated in figure 3, in the subsequent depositing of concrete in the columns 6. When the columns 6 have been cast, the shuttering, which has e.g. been mounted on the foundation elements 1 at the delivery from the element factory, is removed. The connections between the foundation elements 1 are jointed e.g. by a mastic joint between the front plates 2 and foaming between the insulation elements 3, so that the connections between the foundation elements 1 are tight and insulating, it being possible to perform the jointing both before and after the casting of the columns 6. A drain layer 12 and an insulation 13 as well as reinforcement for a ground deck 11 are provided. The beams 7 and the ground deck 11 are then cast and preferably in one and the same operation. It is ensured hereby that the transition between the foundation 1 and the ground deck 11 is tight, and that the construction is thereby protected as best as possible against the ingress of radon. At the casting of beam 7 and ground deck 11, the insulation 13 of the ground deck may serve as a permanent shuttering for the beam 7.

Alternatively, columns 6 and overlying reinforced beams 7 may be cast in one and the same operation with the ground deck 11, which likewise ensures that the transition between these elements is tight, and that the construction is thereby protected as best as possible against the ingress of radon.

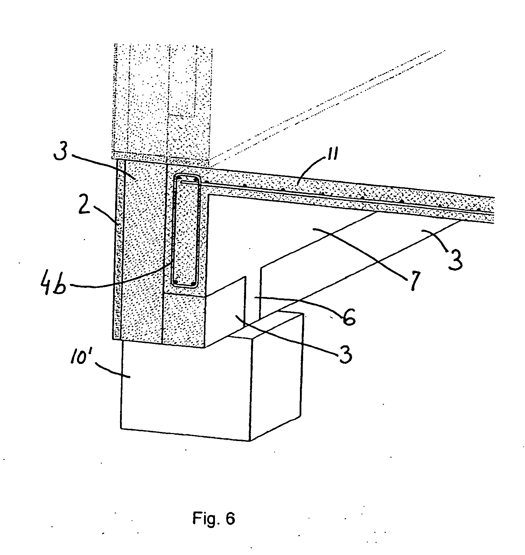

The foundation element 1 is intended to be disposed on a precast base foundation 10, which may be a line foundation, as shown in figures 1 - 5. Figure 6 shows an alternative embodiment of the foundation element 1, which is mounted on a point foundation 10'. In this embodiment, columns 6 are present only at the point foundations 10', and the beam 7 is moreover dimensioned more strongly, as it is dimensioned for a greater static impact.

The foundation element 1 is constructed such that there is a suitable layer of the insulation element 3 between the front plate 2 and the load-bearing columns 6 and beams 7, as thermal bridges may be eliminated hereby. It has been found in practice that an insulation layer of about 100 mm in front of columns and beams is sufficient to avoid the occurrence of thermal bridges in the finished foundation or at the connection between the foundation and a ground deck 11 and/or walls.

Thus, the foundation element 1 according to the invention also uses the insulation material 3 to minimize the amount of concrete. Instead of using unreinforced or reinforced structures in great thicknesses and consequently large amounts of concrete, reinforced structures with statically optimized dimensions are used here, and consequently smaller thicknesses and smaller amounts of concrete.
Thus, the foundation element 1 according to the invention minimizes the amount of concrete relative to the traditionally used in situ works with the same strength in all types of constructions. At the same time, the foundation element 1 provides a solution to the great insulation requirements which are made with respect to building constructions today. With the foundation elements 1, it is possible to use incorporated prefabricated welded reinforcement 4 to a great extent, so that the elements 1 arrive at the construction site with reinforcement 4. This will accelerate the production rate considerably at the construction site, it having been found that the foundation works may be finished in approximately half the time compared to traditionally built block structures or shuttered structures.

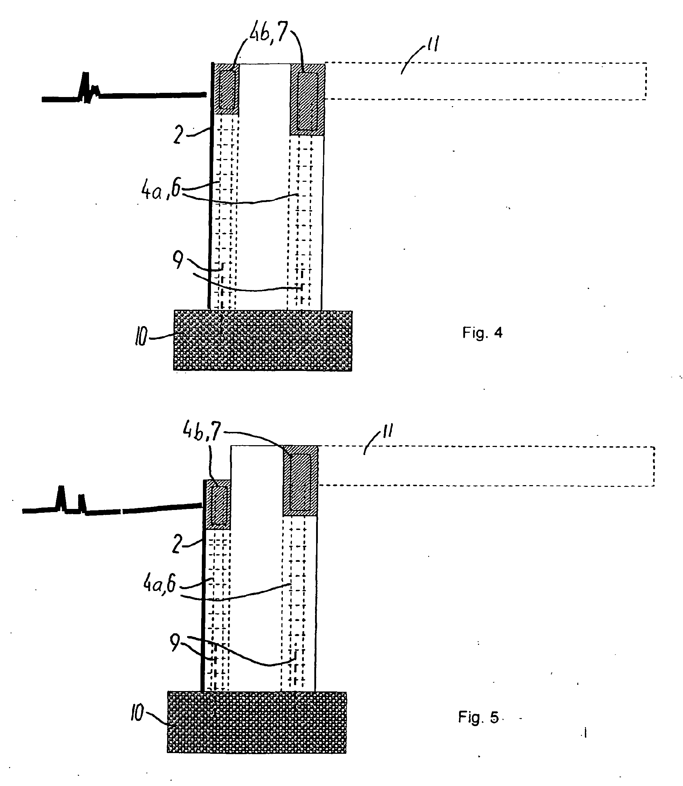

The foundation element 1 according to the invention may be configured for all types of front structures, including faced structures and other structures, where load-bearing capacity is required in the foundation below the front covering, and in combinations of these (with both a load-bearing front wall and rear wall), just as the two load-bearing beams may be constructed with the upper sides of the beams at the same or at different levels (see figures 4 - 5).

## Claims

1. A foundation element (1) for mounting on a precast base foundation (10, 10'), wherein the foundation element (1) comprises a front plate (2), an insulation element (3) as well as a plurality of load-bearing columns (6) and beams (7), **characterized in that** said insulation element (3) comprises vertical recesses (5a) on the side of the insulation element (3) which faces away from the front plate (2) in which reinforcement (4a) is mounted, and in which a plurality of load-bearing concrete columns (6) may be cast, as well as one or more horizontal recesses (5b), wherein one of the horizontal recesses (5b) is placed along the upper edge of the insulation element (3) on the side which faces away from the front plate (2), and in which reinforcement (4b) is likewise mounted, and in which the load-bearing concrete beam (7) along the upper edge of the insulation element (3) on the side which faces away from the front plate (2) is cast together with a ground deck (11).

2. A foundation element according to claim 1, **characterized in that** recesses (5a, 5b) are also provided on the side of the insulation element (3) which faces inwardly toward the front plate (2).

3. A foundation element according to any one of claims 1 - 2, **characterized in that** the front plate (2) has dowels (8) which extend through the insulation element (3) to recesses (5a, 5b), wherein the dowels (8) secure the front plate (2) to the insulation element (3) with lock washers, and wherein the free end of the dowels (8) may be embedded in columns (6) and/or beams (7).

4. A foundation element according to any one of claims 1 - 3, **characterized in that** the front plate (2) is preferably of soft-cast fibre concrete or fibre-reinforced render.

5. A method of mounting a foundation element (1) according to claims 1-4, wherein the foundation element (1) is mounted on a precast base foundation (10, 10'), **characterized in**
- **that** dowels (9) in the base foundation (10, 10') are disposed corresponding to columns (6) of the foundation element (1),
- **that** load-bearing columns (6) are cast of concrete around a reinforcement (4a) in each of the recesses (5a) in on the side of the insulation element (3) which faces away from the front plate (2) of the foundation element (1),
- and **that** at least one load-bearing beam (7) is cast of concrete around at least one reinforcement (4b) in at least one horizontal recess (5b) along the upper edge of the side of the insulation element (3) which faces away from the front plate (2) of the foundation element (1), and wherein the load-bearing concrete beam (7) along the upper edge of the insulation element (3) on the side which faces away from the front plate (2) is cast together with the ground deck (11), and
- said foundation element (1) being connected with the base foundation (10, 10') by embedding the dowels (9) in the reinforced load-bearing columns (6) of the foundation element (1).

6. A method according to claim 5, **characterized in that** the columns (6) of the foundation element (1) are cast in a first step and then harden completely or partly, and that at least one beam (7) is then cast together with a ground deck (11) in one and the same operation.

7. A method according to claim 5, **characterized in that** the columns (6) and beams (7) of the foundation element (1) are cast together with a ground deck (11) in one and the same operation.

8. A method according to any one of claims 5 - 7, **characterized in that** the connections between the foundation elements (1) are sealed prior to the casting of the columns (6) or after the casting of the columns (6) and prior to the casting of beams (7) and ground deck (11).

9. Use of a foundation element according to any one of claims 1 - 4, **characterized in that** the foundation element (1) may be used for structures having a load-bearing front wall and/or rear wall.

## Patentansprüche

1. Fundamentelement (1) zum Montieren auf ein Fertigteilfundament (10, 10'), wobei das Fundamentelement (1) eine Vorderplatte (2), ein Isolierelement (3) und eine Vielzahl von lasttragenden Säulen (6) und Balken (7) umfasst, **dadurch gekennzeichnet, dass** das erwähnte Isolierelement (3) senkrechte Aussparungen (5a) an der der Vorderplatte (2) abgewandten Seite aufweist, worin eine Bewehrung (4a) angeordnet ist, und worin eine Vielzahl von lasttragenden Betonsäulen (6) gießbar ist, sowie mindestens eine waagerechte Aussparung (5b), die entlang der Oberkante des Isolierelements (3) an der der Vorderplatte (2) abgewandten Seite angeordnet ist, und worin auch eine Bewehrung (4b) angeordnet ist, und worin entlang der Oberkante des Isolierelements (3) an der der Vorderplatte (2) abgewandten Seite ein Terraindeck (11) mit dem lasttragenden Betonbalken (7) vereint gegossen wird.

2. Fundamentelement nach Anspruch 1, **dadurch gekennzeichnet, dass** Aussparungen (5a, 5b) auch an der nach innen weisenden, der Vorderplatte (2) zugewandten Seite des Isolierelements (3) angeordnet sind.

3. Fundamentelement nach irgendeinem der Ansprüche 1-2, **dadurch gekennzeichnet, dass** die Vorderplatte (2) Dübel (8) aufweist, die durch das Isolierelement (3) bis zu Aussparungen (5a, 5b) verlaufen, worin die Dübel (8) die Vorderplatte (2) zum Isolierelement (3) mit Sicherungsscheiben befestigen, und wobei die freien Enden der Dübel (8) in Säulen (6) und/oder Balken (7) einbettbar sind.

4. Fundamentelement nach irgendeinem der Ansprüche 1-3, **dadurch gekennzeichnet, dass** die Vorderplatte (2) vorzugsweise aus weichgegossenem Faserbeton hergestellt ist oder einen faserbewehrten Berapp aufweist.

5. Verfahren zum Montieren eines Fundamentelements (1) nach den Ansprüchen 1-4, wobei das Fundamentelement (1) auf einem Fertigteilfundament (10, 10') montiert ist, **dadurch gekennzeichnet,**
- **dass** Dübel (9) entsprechend den Säulen (6) des Fundamentelements (1) im Fundament (10, 10') angeordnet sind,
- **dass** lasttragende Säulen (6) aus Beton um eine Bewehrung (4a) herum in den jeweiligen Aussparungen (5a) an der der Vorderplatte (2) des Fundamentelements (1) abgewandten Seite des Isolierelements (3) gegossen werden,
- und **dass** mindestens ein lasttragender Balken (7) aus Beton um eine Bewehrung (4b) herum in mindestens einer waagerechten Aussparung (5b) entlang der Oberkante der der Vorderplatte (2) des Fundamentelements (1) abgewandten Seite des Isolierelements (3) gegossen wird, und wobei der lasttragende Betonbalken (7) entlang der Oberkante des Isolierelements (3) an der der Vorderplatte (2) abgewandten Seite mit dem Terraindeck (11) vereint gegossen wird, und
- **dass** das erwähnte Fundamentelement (1) durch das Einbetten der Dübel (9) in die bewehrten, lasttragenden Säulen (6) des Fundamentelements (1) mit dem Fundament (10, 10') verbunden ist.

6. Verfahren nach Anspruch 5, **dadurch gekennzeichnet, dass** die Säulen (6) des Fundamentelements (1) in einem ersten Verfahrensschritt gegossen werden und danach teilweise oder ganz aushärten, und dass danach mindestens ein Balken (7) in einer und derselben Operation mit einem Terraindeck (11) vereint gegossen wird.

7. Verfahren nach Anspruch 5, **dadurch gekennzeichnet, dass** die Säulen (6) und Balken (7) des Fundamentelements (1) in einer und derselben Operation mit einem Terraindeck (11) vereint gegossen werden.

8. Verfahren nach irgendeinem der Ansprüche 5-7, **dadurch gekennzeichnet, dass** die Verbindungen zwischen den Fundamentelementen (1) vor dem Gießen der Säulen (6) oder nach dem Gießen der Säulen (6) und vor dem Gießen der Balken (7) und des Terraindecks (11) versiegelt werden.

9. Verwendung des Fundamentelements nach irgendeinem der Ansprüche 1-4, **dadurch gekennzeichnet, dass** das Fundamentelement (1) für Konstruktionen mit einer lasttragenden Vorderwand und/oder Hinterwand eingesetzt wird.

## Revendications

1. Élément de fondation (1) pour le montage sur une fondation de base préfabriquée (10, 10'), dans lequel l'élément de fondation (1) comprend une plaque avant (2), un élément d'isolation (3) ainsi qu'une pluralité de colonnes (6) et de poutres (7) porteuses, **caractérisé en ce que** ledit élément d'isolation (3) comprend des évidements verticaux (5a) sur le côté de l'élément d'isolation (3) qui est orienté opposé à la plaque avant (2) dans laquelle le renforcement (4a) est monté, et dans laquelle une pluralité de colonnes en béton porteuses (6) peut être coulée, ainsi qu'un ou plusieurs évidements horizontaux (5b), dans lequel l'un des évidements horizontaux (5b) est placé le long du bord supérieur de l'élément d'isolation (3) sur le côté opposé à la plaque avant (2), et dans lequel le renforcement (4b) est également monté, et dans lequel la poutre en béton porteuse (7) le long du bord supérieur de l'élément d'isolation (3) sur le côté opposé à la plaque avant (2) est coulée de concert avec un pont de masse (11).

2. Élément de fondation selon la revendication 1, **caractérisé en ce que** les évidements (5A, 5b) sont également prévus sur le côté de l'élément d'isolation (3) qui est orienté vers l'intérieur vers de plaque avant (2).

3. Élément de fondation selon l'une quelconque des revendications 1-2, **caractérisé en ce que** la plaque avant (2) comporte des goujons (8) qui s'étendent à travers l'élément d'isolation (3) vers des évidements (5A, 5b), dans lequel les goujons (8) fixent la plaque avant (2) à l'élément d'isolation (3) avec des rondelles de verrouillage, et dans lequel l'extrémité libre des goujons (8) peut être incorporé dans des colonnes (6) et/ou des poutres (7).

4. Élément de fondation selon l'une quelconque des revendications 1-3, **caractérisé en ce que** la plaque avant (2), de préférence, est constituée de béton fibreux de coulée douce ou de crépi armé des fibres.

5. Procédé de montage d'un élément de fondation (1) selon les revendications 1-4, dans lequel l'élément de fondation (1) est monté sur une fondation de base préfabriquée (10, 10'), **caractérisé en ce que**
- des goujons (9) dans la fondation de base (10, 10') sont disposés correspondant à des colonnes (6) de l'élément de fondation (1),
- que des colonnes de support (6) sont coulés de béton autour d'un renforcement (4a) dans chacun des évidements (5A) sur le côté de l'élément d'isolation (3) opposé à la plaque avant (2) de l'élément de fondation (1),
- et **en ce qu'**au moins une poutre porteuse (7) est coulée du béton autour d'au moins un renforcement (4B) dans au moins un évidement horizontal (5b) le long du bord supérieur du côté de l'élément d'isolation (3) opposé à la plaque avant (2) de l'élément de fondation (1), et dans lequel la poutre en béton porteuse (7) le long du bord supérieur de l'élément d'isolation (3) sur le côté opposé à la plaque avant (2) est coulée de concert avec le pont de masse (11), et
- ledit élément de fondation (1) étant relié à la fondation de base (10, 10') en encastrant les goujons (9) dans les colonnes porteuses renforcées (6) de l'élément de fondation (1).

6. Procédé selon la revendication 5, **caractérisé en ce que** les colonnes (6) de l'élément de fondation (1) sont coulées dans une première étape, puis durcissent complètement ou partiellement, et **en ce qu'**au moins une poutre (7) est ensuite coulée conjointement avec un pont de masse (11) dans une seule et même opération.

7. Procédé selon la revendication 5, **caractérisé en ce que** les colonnes (6) et les poutres (7) de l'élément de fondation (1) sont coulées avec un pont de masse (11) dans une seule et même opération.

8. Procédé selon l'une quelconque des revendications 5 à 7, **caractérisé en ce que** les connexions entre les éléments de fondation (1) sont scellées avant la coulée des colonnes (6) ou après la coulée des colonnes (6) et avant la coulée de poutres (7) et de pont de masse (11).

9. Utilisation d'un élément de fondation selon l'une quelconque des revendications 1-4, **caractérisée en ce que** l'élément de fondation (1) peut être utilisé pour des structures ayant une paroi avant porteuse et/ou une paroi arrière porteuse.
